# EUROPEAN PATENT APPLICATION

(11) **EP 1 418 119 A2**
(43) Date of publication of application: **12.05.2004**
(21) Application number: 03026017.8
(22) Date of filing: 11.11.2003
(51) Int. Cl.: B62J 17/04

(54) **Windscreen device**

(30) Priority: 11.11.2002 JP 2002327183
(71) Applicant: YAMAHA HATSUDOKI KABUSHIKI KAISHA, Iwata-shi Shizuoka-ken (JP)
(72) Inventor: Suzuki, Yasuhito, Iwata-shi Shizuoka-ken (JP)
(74) Representative: Grünecker, Kinkeldey, Stockmair & Schwanhäusser Anwaltssozietät

(57) **Abstract**

The invention aims to provide a detachable windscreen, in particular for a motorcycle, in which a windscreen can be easily but safely attached or detached, in particular without tools.

Therefore, a detachable windscreen is proposed comprising a connection means for connecting a detachable windshield having a mount bracket (52) to a body of a vehicle (1), in particular a motorcycle, wherein a mount stay (33) being fixedly attachable to said vehicle body and by said connection means (51) comprising a hook-shaped connecting element (32e) provided at one of said mount bracket (52) and said mount stay (33) and a lock mechanism (40) for firmly connecting said mount bracket (52) to said mount stay (33) provided at said other one.

## Description

This invention relates to a windscreen device comprising a connection means for connecting a detachable windshield having a mount bracket, to a body of a vehicle, in particular a motorcycle. Further, the invention relates to a vehicle, in particular a motorcycle.

Some motorcycles have a windscreen disposed forward of a rider to block a headwind. A conventional windscreen, to be attached to the vehicle body, is generally secured to steering handlebars through brackets with bolts or secured to a headlight through brackets with bolts, as for example disclosed in the Japanese patent publication JP-A-Hei 8-258772.

Besides, from US 5,658,035, a windscreen device of the above kind is known. With such a device having a removable windscreen, a rider can attach or detach the windscreen depending on highway driving or local street driving, or on the rider's preference. However, facilitating the attachment and detachment of the windscreen was not sufficiently taken into consideration in this conventional windscreen device. Since the windscreen is only secured to the motorcycle by means of a spring element urging the screen to a bushing of the main body of the motorcycle, it is possible that the windscreen may loosen unintentionally, especially when driving on bumpy roads.

Therefore, it is an object of the present invention to improve a windscreen device as described above in that the detachable windshield can be connected to the vehicle more reliably but still being easy to detach and attach. It is a further object of the invention to provide a vehicle having such a device.

For a detachable windscreen, this objective is solved in an inventive manner by a mount stay being fixedly attachable to said vehicle body and by said connection means comprising a hook-shaped connecting element provided at one of said mount bracket and said mount stay and a lock mechanism for firmly connecting said mount bracket to said mount stay provided at said other one.

Thereby, a windscreen can still be easily attached or detached, even more advantageously the windscreen is detachable without the use of tools.

According to a preferred embodiment, said locking means is a knee-lever mechanism for urging the hook-shaped connecting element to a locked position. Preferably, said connecting means further comprises a damper member and a stopper member, wherein said damper member is provided at one of the mount stay and the mount bracket, and the stopper member engageable with the damper member is provided at the other one.

More preferably, the windshield is adjustable with respect to the mount bracket at least in a vertical direction, wherein, according to an embodiment, the windshield is mounted to the mount bracket via a number of bolts which are guided in vertically extending holes provided in said windshield and/or in vertical plates of said mount bracket.

Advantageously, said lock mechanism has an arm engageable with the hook-shaped connecting element and a lever linking to the arm and turnable between a locked and an unlocked position, wherein the arm is urged towards the locked position by a spring. Therein, preferably the windscreen is secured to the vehicle body by engaging the damper member with the stopper member as well as engaging the arm with the hook-shaped connecting element and turning the lever to the locked position.

According to a preferred embodiment, the lock mechanism comprises a key cylinder operable by a key, in particular by a key, which also serves as a main key of the vehicle.

Additionally, for a vehicle, in particular a motorcycle, the above object is solved in an inventive manner in that a windscreen device according to one of the claims 1 to 8 is provided at said vehicle body.

Preferably, at such a vehicle, said first key cylinder, in particular for a main switch, is provided at the vehicle body and a second key cylinder is provided at said connecting means, in particular at said lock mechanism, wherein said first and said second key cylinders are operable by the same key.

Other preferred embodiments of the present invention are laid down in further dependent claims.

In the following, the present invention will be described in greater detail by means of embodiments with reference to the accompanying drawings, wherein:
- Fig. 1: is a side view of a motorcycle provided with a windscreen device according to an embodiment of the present invention;
- Fig. 2: is a side view of the windscreen device;
- Fig. 3: is a front view of the windscreen device;
- Fig. 4: is a perspective view of the windscreen device;
- Fig. 5: is a perspective view of the windscreen device;
- Fig. 6: is a sectional view of a boss member of the windscreen device;
- Fig. 7: are views showing a hook and a lock mechanism of the windscreen device; and
- Fig. 8: are views showing the hook and the lock mechanism.

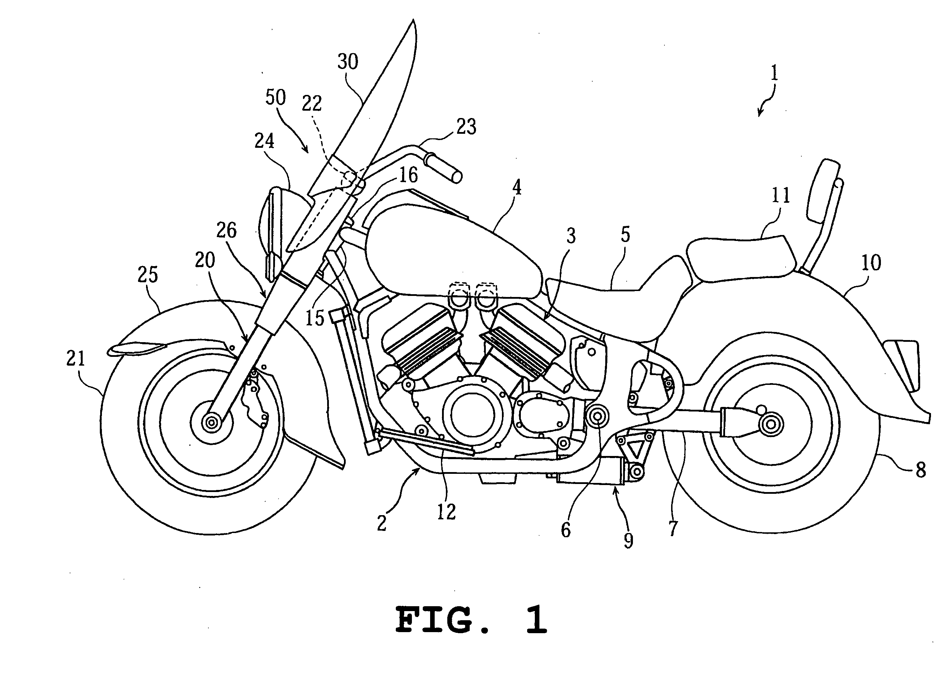

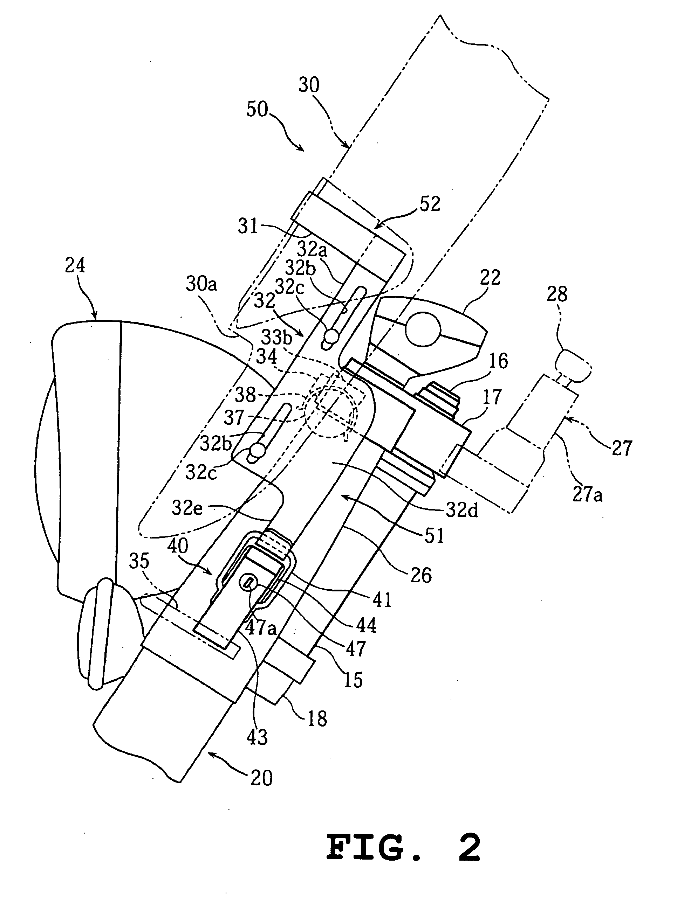

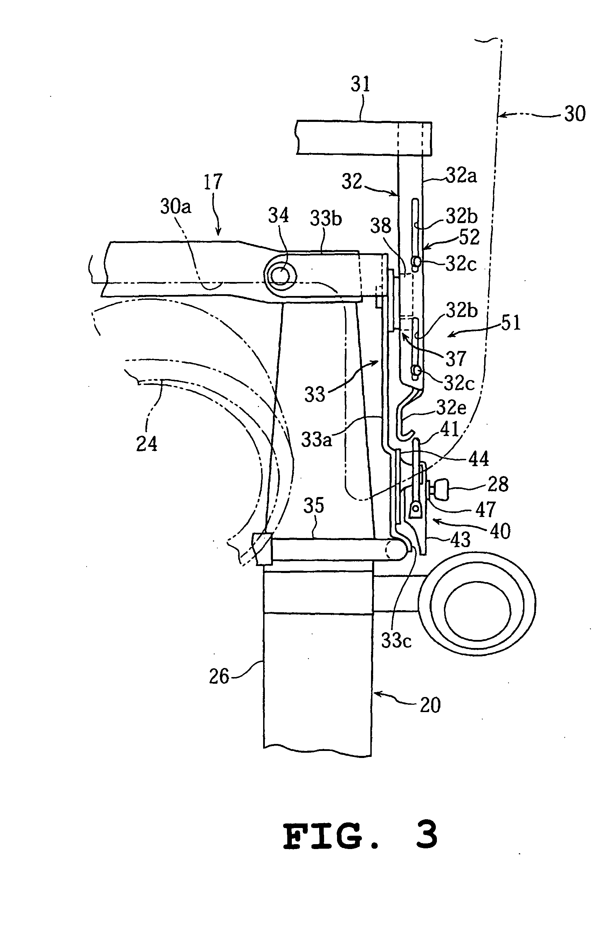

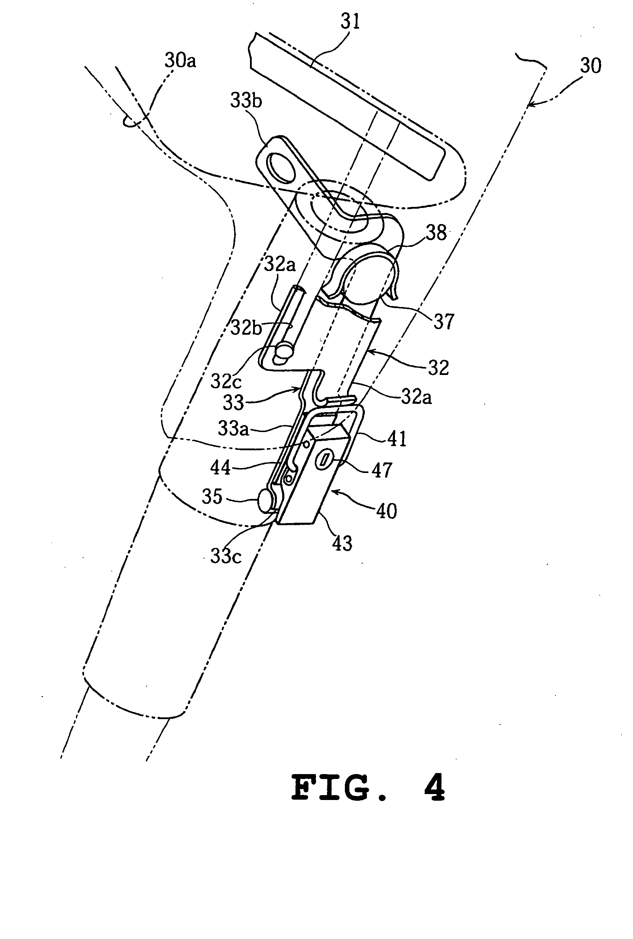

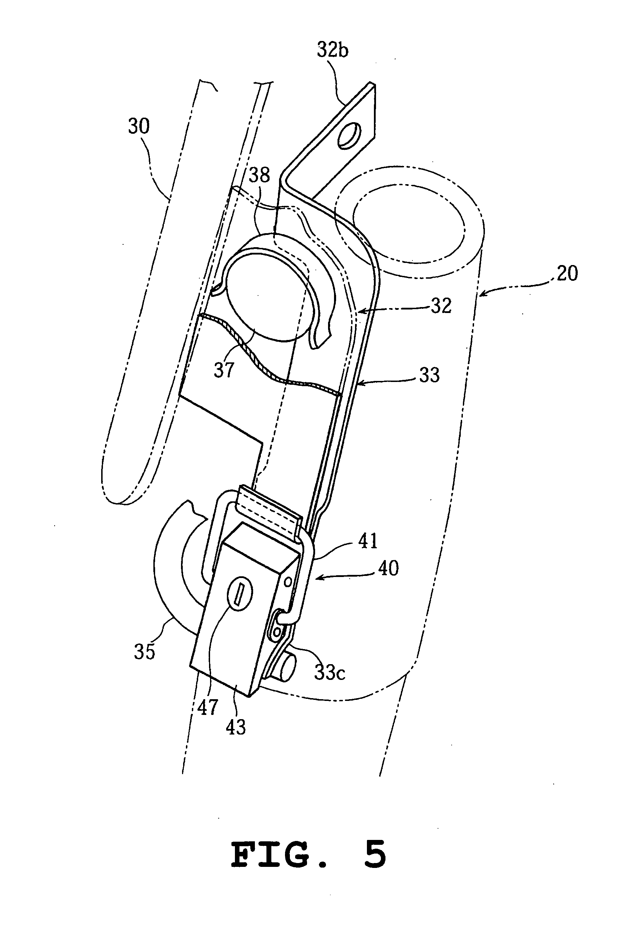

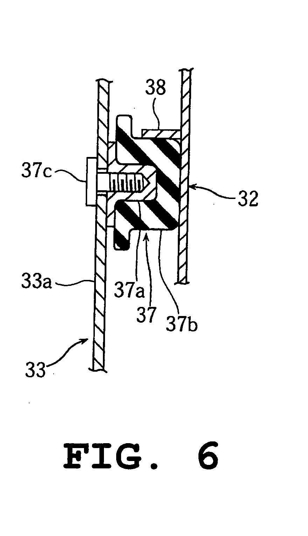

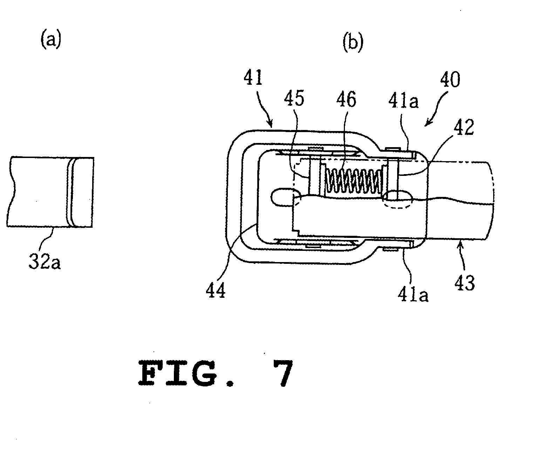

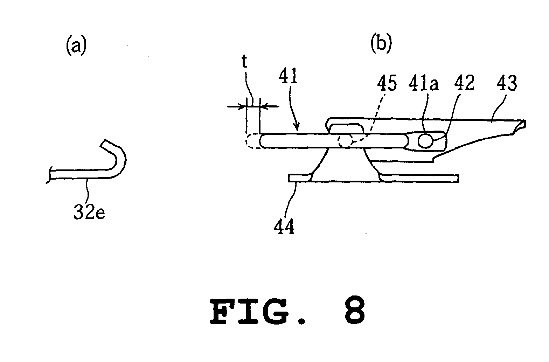

Figs. 1 through 8 are explanatory drawings of a windscreen device for a motorcycle according to an embodiment of the present invention. Fig. 1 is a side view of a motorcycle provided with the windscreen device. Figs. 2 and 3 are a side view and a front view of the windscreen device, respectively. Figs. 4 and 5 are perspective views of the windscreen device. Fig. 6 is a sectional view of a rubber damper of the windscreen device. Fig. 7(a) and 7(b) are plan views of a hook and a lock mechanism, respectively. Fig. 8(a) and 8(b) are side views of the hook and the lock mechanism, respectively.

In the drawings, reference numeral 1 denotes the motorcycle. This motorcycle is preferably constituted, in rough description, with a water-cooled 4-cycle V4-cylinder engine 3 mounted on a double-cradle body frame 2, and a fuel tank 4 as well as a seat 5 disposed on the upper portion of the body frame 2.

At the lower rear end of the body frame 2, a pair of left and right rear arms 7 are pivotably supported with a pivot shaft 6 for upward and downward swing. A rear wheel 8 is supported between the rear ends of the rear arms 7.

A drive shaft (not shown) for transmitting the engine power to the rear wheel 8 is fitted in the rear arms 7. A rear suspension 9 is suspended between the rear arms 7 and the body frame 2.

A rear fender 10 is provided above the rear wheel 8. A rear seat 11 is provided above the rear fender 10. The body frame 2 has footrest boards 12 which allow the rider to rest his/her feet at its left and right lower ends below the fuel tank 4.

A head pipe 15 is connected to the front end of the body frame 2. The head pipe 15 is provided with a steering shaft 16 rotatable via a bearing (not shown). The steering shaft 16 has an upper bracket 17 and an under bracket 18 tightly secured to its upper and lower ends, respectively. A pair of left and right front forks 20 are fixedly connected to both the brackets 17 and 18. A front wheel 21 is supported between the bottom ends of the front forks 20.

To the upper bracket 17 is secured a pair of left and right handle crowns 22 via interposed rubber bushes (not shown). Steering handlebars 23 are fixed to each handle crown 22 with bolts. The left and right front forks 20 have a headlight 24 attached to their upper ends while having a front fender 25, for covering the upper portion of the front wheel 21, attached to their lower ends.

Approximately upper half of each front fork 20 is covered with a cylindrical fork cover 26. The fork cover 26 is fixed to the upper and under brackets 17 and 18. A main switch 27 is provided rearward of the upper bracket 17. The main switch 27 has a key cylinder 27a through which a main key 28 is inserted.

At the front end of the body frame 2, a windscreen device 50 is disposed for blocking a headwind. The windscreen device 50 has a detachable windscreen with a windshield 30 and an attachment/detachment mechanism 51 for attaching or detaching the windscreen/windshield 30 to or from the vehicle body.

The windshield 30 made of polycarbonate is large enough to cover the front of the rider seated on the seat 5. The windshield 30 is formed with opposite sides edges curved toward the rear of the vehicle. At the lower edge of the windshield 30, a recess 30a is formed to avoid interfering with the headlight 24.

In the attachment/detachment mechanism 51, a lock mechanism 40 locks or unlocks a mount bracket 52 secured to the windscreen, and a mount stay 33 secured to the vehicle body.

In the mount bracket 52, a band-shaped horizontal plate 31 extending in the lateral direction of the vehicle is secured to the bottom of the windshield 30, and left and right vertical plates 32, 32 extend downward along the outer side surface of each fork cover 26 from the left and right ends of the horizontal plate 31.

Each of the left and right vertical plates 32 has vertically extending holes 32b formed on its band-shaped support member 32a vertically extending. The windshield 30 is secured to the vertical plates 32, 32 with bolts 32c inserted through the vertically extending holes 32b so that the vertical position of the windshield 30 can be adjusted.

Each of the vertical plates 32 includes a base portion 32d integrally formed with the lower half of the support member 32a, and extending rearward. The laterally inner side of the base portion 32d is provided with a stopper 38 formed into a semi-circular band. A hook 32e is integrally formed with the lower edge of the base portion 32d to extend downward. The hook 32e is formed with its lower end curved upward and toward the outer side of the vehicle into a J-shape.

The mount stay 33 is disposed behind the vertical plates 32 of the mount bracket 52. The mount stay 33 has a fixed portion 33b integrally formed with the upper edge of a band-shaped main stay 33a vertically extending, from which the fixed portion 33b curves toward the vehicle body. The fixed portion 33b is tightly fixed to the front wall of the upper bracket 17 with a bolt 34. The main stay 33a has a lower end 33c interconnected by welding to a bar member 35, which is secured to the vehicle body.

A portion corresponding to the stopper 38 and formed on the upper part of the main stay 33a or near the mount bracket 52 is provided with a cylindrical damper member 37. As shown in Fig. 6, the damper member 37 comprises a metal boss 37a and a hard rubber damper 37b fixed to the metal boss 37a, while being tightly screwed by a bolt 37c to the mount stay 33.

The lock mechanism 40 which preferably is of the knee-lever type is provided on the mount stay 33 and below the hook 32e. The lock mechanism 40 comprises an arm 41 disengageably engaged with the hook 32e and a lever 43 to which ends 41 a, 41 a of the arm 41 are swingably connected via a connecting pin 42. The lever 43 has a front end supported for turning between the locked position and the unlocked position with a turning pin 45 inserted through a base 44 which is secured to the mount stay 33 with bolts.

The arm 41 made of bar material is curved into an approximately U-shape. The connecting pin 42 journaling the arm 41 can be moved by a distance (t) relative to the lever 43 in the longitudinal direction (See Fig. 8(b)). A spring 46 interposed between the pins 42 and 45 urges the connecting pin 42 as well as the arm 41 toward the locked position.

A key cylinder 47 having a key insertion part 47a is disposed on the lever 43. Inserting the main key 28 for the main switch 27 into the key insertion part 47a for locking up allows the lever 43 to be fixed to the locked position. This can prevent the lever 43 from turning.

Description will next be made of functions and effects of the embodiment of the present invention.

The windscreen 30 to be attached to the vehicle body is positioned from above such that each of the left and right stoppers 38 is engaged with the damper member 37, to turn the lever 43 to the unlocked position whereby the hook 32e is engaged with the arm 41 to turn the lever 43 to the locked position (See Fig. 2).

This allows the damper member 37 and the stopper 38 to be securely engaged with each other using a tensile force produced by the lock mechanism 40 so that the windscreen with the windshield 30 is secured to the front forks 20. The windscreen 30 is removed by turning the lever 43 from the locked position to the unlocked position to release the arm 41 from the hook 32e, so that the windscreen 30 is removed from above.

According to the embodiment of the present invention as described above, the damper member 37 is attached to the mount stay 33 fixedly supported with the front fork 20. Also, each vertical plate 32 of the mount bracket 52 which is secured to the windscreen 30 is provided with the stopper 38, and the lock mechanism 40 is provided to allow the arm 41 to be engaged with the hook 32e of the vertical plate 32 so as to pull them downward. The windscreen 30 can be thus attached to or detached from the vehicle body through simple work without tools, that is, turning the lever 43 between the locked position and the unlocked position.

The damper member 37 including the rubber damper 37b, and the arm 41 urged toward the locked position by the spring 46 can prevent the windscreen 30 rattle and vibration while driving.

According to the embodiment of the present invention, the lever 43 has the key cylinder 47 disposed for securing the lever 43 to the locked position. This can prevent the windscreen from being tampered and stolen. The key 28 into the key cylinder 47 also serves as a main key 28 for the main switch 27. There is thus no need for an extra key.

In other words, as a windscreen device for a motorcycle described before by means of a preferred embodiment has a windscreen removably attached to a vehicle body so as to cover the front of a rider. Therein, a damper member is provided on one of the vehicle body and the windscreen, a stopper engageable with the damper member is provided on the other one, a hook is attached to one of the vehicle body and the windscreen, a lock mechanism for urging the hook to a locked position is provided on the other one, and has an arm disengageably engaged with the hook, and a lever linking to the arm and turnable between a locked position and an unlocked position, and engaging the damper member with the stopper as well as engaging the arm with the hook to turn the lever to the locked position allows the windscreen to be secured to the vehicle body.

In such a windscreen device, the windscreen is attached to the vehicle body by engaging the stopper with the damper member, and engaging the arm with the hook to turn the lever to the locked position. This allows the damper member and the stopper to be securely engaged with each other using a tensile force produced by the lock mechanism so that the windscreen is secured to the vehicle body. The windscreen is removed by turning the lever from the locked position to the unlocked position to release the arm from the hook.

Accordingly, the windscreen can be attached to or detached from the vehicle body through simple work without tools, that is, turning the lever between the locked position and the unlocked position.

In such a lock mechanism, the arm urged toward the locked position by the spring allows the windscreen to be further tightly secured to the vehicle body. This can prevent a windscreen rattle and vibration while driving.

The lever is provided with a key, wherein the key cylinder is disposed for securing the lever to the locked position. This can prevent the windscreen from being tampered and stolen. Since the key also serves as a main key for the vehicle, no extra key is needed.

Such a motorcycle having a windscreen removably attached to a vehicle body so as to cover the front of a rider allows the rider to attach or detach the windscreen depending on highway driving or local street driving, or on the rider's preference.

As described before, the invention also relates to a windscreen device comprising a connection means for connecting a detachable windshield to a body of a vehicle, in particular a motorcycle, wherein said connection means comprises a knee-lever mechanism.

Therein, said connection means preferably comprises a mount bracket being attached to said detachable windshield and a mount stay being fixedly attachable to said vehicle body. Further, preferably, said connection means further comprises a hook-shaped connecting element engageable with said knee-lever mechanism, for urging the hook-shaped connecting element to a locked position.

Additionally, said hook-shaped connecting element is provided at one of said mount bracket and said mount stay, and said knee-lever mechanism is provided at said other one.

According to still another embodiment, said connecting means further comprises a damper member and a stopper member, wherein said damper means is provided at one of the mount stay and the mount bracket, and the stopper member engageable with the damper member is provided at the other one.

More preferably, the windshield is adjustable with respect to the mount bracket at least in a vertical direction. The windshield is mounted to the mount bracket via a number of bolts which are guided in vertically extending holes provided in said windshield and/or in vertical plates of said mount bracket.

According to a preferred embodiment, said knee-lever mechanism has an arm engageable with the hook-shaped connecting element and a lever linking to the arm and turnable between a locked and an unlocked position, wherein the arm is urged towards the locked position by a spring.

According to another preferred embodiment, the windscreen is secured to the vehicle body by engaging the damper member with the stopper member as well as engaging the arm with the hook-shaped connecting element and turning the lever to the locked position.

Additionally, said knee-lever mechanism comprises a key cylinder operable by a key, in particular by a key, which also serves as a main key of the vehicle.

Also, the invention relates to a vehicle, in particular a motorcycle, which comprises a windscreen device comprising a detachable windshield as just described in the above paragraphs and which is provided at said vehicle body.

Additionally, a first key cylinder, in particular for a main switch, is provided at the vehicle body and a second key cylinder is provided at said connecting means, in particular at said knee-lever mechanism, wherein said first and said second key cylinders are operable by the same key.

As described above, in order to provide a windscreen device for a motorcycle in which a windscreen can be easily but safely and securely attached or detached, in particular without tools, a windscreen device for a motorcycle is proposed having a windscreen removably attached to a vehicle body, wherein a boss member 37 is provided on a front fork (a vehicle body) 20, a stopper 38 engageable with the boss member 37 is provided on a windscreen 30, a hook 32a is attached to the windscreen 30, a lock mechanism 40 is provided on the front fork 20, and has an arm 41 disengageably engaged with the hook 32a, and a lever 43 linking to the swingable arm 41, and turnable between a locked position and an unlocked position.

## Claims

1. Windscreen device comprising a connection means (51) for connecting a detachable windshield (30) having a mount bracket (52) to a body of a vehicle (1), in particular a motorcycle, **characterized by** a mount stay (33) being fixedly attachable to said vehicle body and by said connection means (51) comprising a hook-shaped connecting element (32e) provided at one of said mount bracket (52) and said mount stay (33) and a lock mechanism (40) for firmly connecting said mount bracket (52) to said mount stay (33) provided at said other one.

2. Windscreen device according to claim 1, **characterized in that** said locking means (51) is a knee-lever mechanism for urging the hook-shaped connecting element (32e) to a locked position.

3. Windscreen device according to claim 1 or 2, **characterized in that** said connecting means (51) further comprises a damper member (37) and a stopper member (38), wherein said damper member (37) is provided at one of the mount stay (33) and the mount bracket (52), and the stopper member (38) engageable with the damper member (37) is provided at the other one (52,33).

4. Windscreen device according to at least one of the claims 1 to 3, **characterized in that** the windshield (30) is adjustable with respect to the mount bracket (52) at least in a vertical direction.

5. Windscreen device according to at least one of the claims 1 to 4, **characterized in that** the windshield (30) is mounted to the mount bracket (52) via a number of bolts (32c) which are guided in vertically extending holes (32b) provided in said windshield (30) and/or in vertical plates (32) of said mount bracket (52).

6. Windscreen device according at least one of the claims 1 to 5, **characterized in that** said lock mechanism (40) has an arm (41) engageable with the hook-shaped connecting element (32e) and a lever (43) linking to the arm (41) and turnable between a locked and an unlocked position, wherein the arm (41) is urged towards the locked position by a spring (46).

7. Windscreen device according to claim 6, **characterized in that** the windscreen is secured to the vehicle body by engaging the damper member (37) with the stopper member (38) as well as engaging the arm (41) with the hook-shaped connecting element (32e) and turning the lever (43) to the locked position.

8. Windscreen device according to at least one of the claims 1 to 7, **characterized in that** the lock mechanism (40) comprises a key cylinder (47) operable by a key (28), in particular by a key (28), which also serves as a main key (28) of the vehicle (1).

9. Vehicle, in particular a motorcycle, **characterized in that** a windscreen device according to one of the claims 1 to 8 is provided at said vehicle body.

10. Vehicle according to claim 9, **characterized in that** a first key cylinder, in particular for a main switch (27), is provided at the vehicle body and a second key cylinder (47) is provided at said connecting means (51), in particular at said lock mechanism (40), wherein said first and said second key cylinders (27,47) are operable by the same key (28).
